(19) Europäisches Patentamt
European Patent Office
Office européen des brevets

(11) Veröffentlichungsnummer: **0 070 455**
**B1**

(12) # EUROPÄISCHE PATENTSCHRIFT

(45) Veröffentlichungstag der Patentschrift: **03.10.84**

(21) Anmeldenummer: **82106055.5**

(22) Anmeldetag: **07.07.82**

(51) Int. Cl.³: **C 09 C 1/00**, C 09 D 5/08, C 09 C 1/02, C 09 C 1/04, C 09 C 1/22, C 09 C 1/34, C 09 C 1/40, C 10 M 1/00

(54) **Aktive Korrosionsschutzpigmente, Verfahren zu ihrer Herstellung und deren Verwendung.**

(30) Priorität: **21.07.81 DE 3128716**

(43) Veröffentlichungstag der Anmeldung: **26.01.83 Patentblatt 83/4**

(45) Bekanntmachung des Hinweises auf die Patenterteilung: **03.10.84 Patentblatt 84/40**

(84) Benannte Vertragsstaaten: **BE DE FR GB IT NL SE**

(56) Entgegenhaltungen:
**GB - A - 2 071 070**

**CHEMICAL ABSTRACTS, Band 89, Nr. 16, 16. October 1978, Seite 29, Nr. 130330f, Columbus Ohio (USA);**

(73) Patentinhaber: **BAYER AG, Konzernverwaltung RP Patentabteilung, D-5090 Leverkusen 1 Bayerwerk (DE)**

(72) Erfinder: **Brunn, Horst, Dr., Oderstrasse 55, D-4150 Krefeld (DE)**
Erfinder: **Hund, Franz, Dr., Scheiblerstrasse 89, D-4150 Krefeld 1 (DE)**
Erfinder: **Rambold, Wolfgang, Dr., Bethelstrasse 12, D-4150 Krefeld 1 (DE)**
Erfinder: **Kresse, Peter, Dr., Deswatinesstrasse 67, D-4150 Krefeld 1 (DE)**
Erfinder: **von Szadkowski, Gerd, Dr., Loenspfad 125, D-4150 Krefeld 1 (DE)**

EP 0 070 455 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Korrosionsschutzpigmente auf Basis von Intercalationsverbindungen, Verfahren zu ihrer Herstellung sowie deren Verwendung.

Aktive Korrosionsschutzpigmente von grosser praktischer Bedeutung sind Bleimennige, Zinkkaliumchromat, Zinkstaub und Zinkphosphat.

Bleipigmente dienen in erster Linie dem Korrosionsspätschutz, während Chromate besser für den Korrosionsfrühschutz geeignet sind. Zinkstaubanstriche bringen mit ihren erforderlichen hohen Zinkmetallgehalten (bis zu 98 Gew.-%) erhebliche Verarbeitungsprobleme. Die bisher als Korrosionsschutzpigmente empfohlenen Zinkphosphatpigmente weisen Korrosionsschutzwerte auf, die wesentlich unter den Werten bisher verwendeter Zinkkaliumchromatpigmente liegen.

Der Einsatz organischer Korrosionsschutzinhibitoren, wie sie bislang bevorzugt in wässerigen Systemen, wie z.B. in Wasserkreisläufen Verwendung finden, scheiterte bislang oft an den Löslichkeitsverhältnissen im Lack, vor allem, wenn es sich um die Salze der Inhibitoren handelte.

Es besteht daher ein erhebliches Interesse an neuen Korrosionsschutzpigmenten, die nicht die Nachteile der bekannten Korrosionsschutzpigmente aufweisen, oder an solchen, die in Kombination mit bekannten Korrosionsschutzpigmenten ein breiteres Wirkungsspektrum ergeben.

Aufgabe der vorliegenden Erfindung ist die Entwicklung neuer aktiver Korrosionsschutzpigmente, die hinsichtlich ihrer Korrosionsschutzwirkung den bekannten Korrosionsschutzpigmenten zumindest ebenbürtig sind und die Nachteile der bekannten Korrosionsschutzpigmente nicht aufweisen.

Materialien, die diese Forderungen in hervorragender Weise erfüllen, sind Kompositionspigmente, bestehend aus einer anorganischen Matrix und in ihr eingelagerten organischen Substanzen der Formel

$$x\,Me\,(II)\,O \cdot \frac{1-x}{2}\,Me\,(III)_2O_3 \cdot y\,A \cdot z\,I \cdot aq$$

in der

| | |
|---|---|
| Me (II) | ein oder mehrere zweiwertige Metalle, |
| Me (III) | ein oder mehrere dreiwertige Metalle, |
| A | ein oder mehrere Anhydride anorganischer Säuren, |
| I | eine oder mehrere organische Verbindungen, und |
| aq | 0,5 bis 9, bevorzugt 0,75 bis 4 mol Wasser bedeuten, |
| x, y und z | ganze oder gebrochene Zahlen sind, wobei |
| x | Werte von 0 bis 1, |
| y | Werte von 0 bis 0,7, und |
| z | Werte von grösser 0 bis 0,4 annehmen, |

mit der weiteren Massgabe, dass mindestens 0,5, bevorzugt mehr als 1,0 Gew.-%, an organischer Substanz, bezogen auf den anorganischen Anteil, enthalten sind.

In ihrer besonders wirksamen Form weisen sie eine spezifische Oberfläche nach BET zwischen 0,1 und 200, bevorzugt zwischen 1 und 150 $m^3/g$, und einen Gehalt an wasserlöslichen Anteilen von weniger als 0,6, vorzugsweise weniger als 0,3% auf.

In der Formel

$$x\,Me\,(II)\,O \cdot \frac{1-x}{2}\,Me\,(III)_2O_3 \cdot y\,A \cdot z\,I \cdot aq$$

können die zweiwertigen Metalle eines oder mehrere der Gruppe Magnesium, Calcium, Strontium, Barium, Zink, Eisen und Mangan, die dreiwertigen Metalle eines oder mehrere der Gruppe Aluminium, Eisen, Mangan und Chrom sein.

Besonders bevorzugt ist dabei die Kombination des dreiwertigen Aluminiums mit den ebenfalls farblosen Erdalkalimetallen und/oder dem Zinkkation, da man bei geeigneten organischen Stoffen wie auch anorganischen Anionen Pigmente ohne Farbkraft erhält, die sich nach Wunsch einfärben lassen.

Die Gruppe der Anhydride anorganischer Säuren wird gebildet aus den Oxiden des Bors, Chroms, Kohlenstoffs, Molybdäns, Phosphors und des Wolframs, bevorzugt sind Kohlendioxid und Phosphorpentoxid. Sie können einzeln oder in Kombination zum Einsatz gelangen.

Die organischen Substanzen in der genannten Formel sind ein oder mehrere dem Stand der Technik angehörende organische Korrosionsinhibitoren mit Lewis-Basen-Charakter.

Eine gute Übersicht dieser Substanzklasse kann den Artikeln Chemikerzeitung Nr. 6 (1976) S. 247-262, Defazet Nr. 4 (1971) S. 155-162, desgl. Nr. 5 S. 213-223, desgl. Nr. 6 S. 257-266, desgl. Nr. 7 S. 310-319, desgl. Nr. 8 S. 361-367 und dem Buch „Corrosion Inhibitors" von M. W. Ranney (Noyes Data Co. 1976) entnommen werden.

Zu der Klasse der wirksamen und einlagerbaren Korrosionsinhibitoren gehören somit höhere Amine, Aldehyde, Alkohole oder Ketone, Amidine, Guanidine, heterocyclische Verbindungen mit Stickstoff und/oder Sauerstoff und/oder Schwefel als Heteroatome (Urotropin, Pyrazole, Imidazole, Imidazoline, Oxazole, Isoxazole, Thiazole, Isothiazole, Triazole, Triazine, Pyridine sowie die entsprechenden benzolanellierten Systeme wie Benzimidazole, Benzothiazole, Benzotriazole, Chinoline oder Isochinoline, Chinazoline und andere), Schwefel/Stickstoff-Verbindungen, organische Acetylenderivate, organische Nitroverbindungen und Ligninderivate (Sulfonate).

Besonders bevorzugt sind Phosphonsäuren und Phosphonocarbonsäuren und deren Derivate und Salze, stickstoffhaltige Phosphon- oder Phosphonocarbonsäuren sowie deren Derivate und Salze, organische und anorganische Salze von Carbonsäuren wie Acetate, Benzoate, Cinnamate, Salicylate, Derivate und Salze von Dicarbonsäuren und Polycarbonsäuren und Polyacrylaten, Derivate von Gerbsäuren wie Tannin und Gallussäure und synthetische aromatische Oxicarbonsäuren mit Phenolcharakter sowie Polymerisate der Polyester von Oxicarbonsäuren mit Phenolcharakter. Selbstverständlich können aber auch geeignete Mischungen dieser Mittel verwendet werden.

Durch den Einbau dieser Verbindungen in die anorganische Matrix lässt sich die Löslichkeit dieser gemeinhin als stark hydrophil bekannten organischen Reagenzien im Bindemittel überraschend so stark herabsetzen, dass ausgezeichnet zu verarbeitende Korrosionsschutzpigmente entstehen. Diese neigen so zum Beispiel nicht zu der für leicht lösliche Pigmente bzw. Pigmente mit zu hohem Salzgehalt typischen Blasenbildung des Bindemittels unter Bewitterungsbedingungen.

Die Auswahl der schliesslich einzulagernden organischen Substanzen richtet sich im wesentlichen nach ihrer Wirtschaftlichkeit sowie der speziellen Einsatzgebiete. Derivate und Salze der Carbonsäuren und Phosphonsäuren werden ebenso bevorzugt eingesetzt wie die Salze der Benzoesäure, Zimtsäure, Polycarbonsäuren und Phosphonopropionsäuren sowie Tannin.

Es ist darauf hinzuweisen, dass die erfindungsgemässen Korrosionsschutzpigmente einen Kristallwasseranteil aufweisen, dessen genaue analytische Bestimmung mit Schwierigkeiten verbunden ist, da teilweise sehr locker gebundene Wassermoleküle vorliegen. So kann es schon bei 60° C zu Dehydratisierungserscheinungen kommen. Dieser relativ flüchtige Wasseranteil hängt stark von den Formulierungsbedingungen (Trockentemperatur und -dauer) sowie der Kristallinität und Teilchengrösse des fertigen Korrosionsschutzpigmentes ab.

Die thermogravimetrische Analyse der Verbindungen ergibt, dass die Dehydratisierung der Substanzen im relativ grossen Bereich von 60 bis 240° C vonstatten geht, während die Dehydroxylierung bei Temperaturen von grösser 160° C für $Me^{2+}$-reiche (hier kann es zu gleitenden Übergängen zwischen Dehydratisierung und Dehydroxylierung kommen), bei Substanzen mit x-Werten von 0,2 bis 0,6 aber erst oberhalb 280° C erfolgt. Geht man zu den $Me^{3+}$-reichen Pigmenten über, so kommt noch eine zweite Dehydroxylierungsstufe bei Temperaturen oberhalb 400° C hinzu.

Gegenstand der vorliegenden Erfindung sind ferner Verfahren zur Herstellung der Korrosionsschutzpigmente der allgemeinen Formel

$$x\,Me\,(II)\,O\,\frac{1-x}{2}\,Me\,(III)_2O_3\cdot y\,A\cdot z\,I\cdot aq$$

Es besteht einmal die Möglichkeit, eine zwei- und/oder dreiwertige Metallsalzlösung im gewünschten Verhältnis mit äquivalenten Mengen oder im Überschuss an Alkalien, gegebenenfalls mit Alkalimetallaten, normal, invers oder gleichzeitig bei Temperaturen bis 100, vorzugsweise 50 bis 100° C, zu fällen, wobei die anorganischen Anionen und die organischen Inhibitoren mit vorgelegt, gleichzeitig oder nach der Fällung, oder gegebenenfalls nach Abtrennung der Mutterlauge des Wirtsgitters zugegeben werden können.

Ein weiteres Verfahren besteht darin, dass basische Salze der zwei- und/oder dreiwertigen Metalle mit der Säureform der anorganischen und gegebenenfalls organischen Ionen bei Temperaturen bis 100, vorzugsweise zwischen 50 und 100° C, an der Luft behandelt und diese gegebenenfalls nach einer vorhergehenden Alkalisierung im Autoklaven bei Temperaturen bis zu 220° C bis zu 12 h lang erhitzt werden.

Natürlich können auch Kombinationen der beiden Herstellungsverfahren durchgeführt werden, wobei auch Salze der anorganischen wie organischen Ionen zum Einsatz gelangen können. Die Alkalidosierung ist dabei so vorzunehmen, dass ein pH-Wert der erfindungsgemässen Korrosionsschutzpigmente von grösser 6, vorzugsweise 7,0 bis 8,5, vorliegt.

Als Ausgangsverbindungen bei der Herstellung der erfindungsgemässen Korrosionsschutzpigmente können für die zweiwertigen Metalle ihre Hydroxide, Hydroxysalze, Carbonate, basische Carbonate, Nitrate, Chloride, Formiate, Acetate, Oxalate und andere organische Verbindungen sowie ihre aktiven Oxide dienen. Die Metalle Zn, Mg, Mn und Fe können zudem auch als Sulfat, Zn ferner als Alkalizinkat eingesetzt werden. Die dreiwertigen Metalle können als Oxidhydroxide, Hydroxide, Hydroxysalze, Carbonate, basische Carbonate, Nitrate, Chloride, Sulfate, Formiate, Acetate, Oxalate bzw. organische Carboxylate zum Einsatz gelangen. Werden in Kombination zu den dreiwertigen Metallen aber Ca-, Sr- und/oder Ba-Salze mit eingesetzt, so ist vom Einsatz von Sulfaten Abstand zu nehmen, da andernfalls schwerlösliche Erdalkalisulfate mit entstehen. Als Fällungsmittel können alkalisch reagierende Substanzen bevorzugt Natronlauge, Soda, Ammoniak, Ammoniumcarbonat oder deren Gemische eingesetzt werden. Erfindungsgemäss ist ein pH von grösser 6,0, vorzugsweise von 7 bis 9, einzustellen, wobei der End-pH-Wert in Abhängigkeit von den eingesetzten Metallionen variiert werden kann und das aufgearbeitete Korrosionsschutzpigment einen DIN-pH-Wert von grösser 6, vorzugsweise 7 bis 8,5, aufweist.

Vorteilhaft ist die Fällung mit einem Überschuss an Alkalien. Dies führt zu ausgezeichneten kristallinen Korrosionsschutzpigmenten. Im Falle der schweren Elemente der Gruppe IIa (Ca, Sr und Ba) beschränkt sich der Einsatz auf wenige Prozente, da andernfalls infolge zu hoher Basizität die Bindemittel leicht verseift und im Endeffekt zerstört werden können. Der Anteil an diesen Metallen wird deshalb so gewählt, dass der pH-Wert des anfallenden Korrisionsschutzpigmentes nicht über pH 12 liegt, vorzugsweise nich über pH 10 liegt. Mit zunehmender Basizität von Calcium über Strontium und Barium muss der Gehalt dieser Erdalkalimetalle in der anorganischen Matrix verringert werden.

Der pH-Wert der Korrosionsschutzpigmente wird nach DIN 53 200 bestimmt, wobei der pH-Wert einer infestgelegter Weise hergestellten Suspension des Pigmentes gemessen wird. Die erfindungsgemässen Korrosionsschutzpigmente zeigen spezifische Oberflächen nach BET (G. Brunnauer, P. H. Emmet und H. Teller, „Amer. Chem. Soc.", 60, 309 [1938]) zwischen 0,1 und 200,

vorzugsweise zwischen 1,0 und 150 $m^3/g$. Die wasserlöslichen Anteile werden gemäss DIN 53 197 angegeben.

Die Korrosionsschutzprüfung der erfindungsgemässen Pigmente erfolgte im Salzsprühtest gemäss SS DIN 50 021 (Dauergesprühung mit 5%iger Kochsalzlösung bei $35 \pm 2°$ C). Als Anstrichträger dienten phosphatierte Stahlbleche (Phosphatierungsverfahren: Bonder 101 der Metallgesellschaft Frankfurt) und entfettete blanke Stahlbleche. Der Auftrag der Grundierung erfolgte im Spritzverfahren. Nach folgender Standardprüfrezeptur wurde gearbeitet:

| | |
|---|---|
| Bindemittel: | Alkydal F 67 (langöliges, fettsäuremodifiziertes Alkydharz) |
| Basispigment: | Bayertitan A |
| Pigmentierungshöhe: | PVK 32% |
| Mischungsverhältnis: | Basis-/aktives Pigment 80:15 Gew.-% |
| Anreibung: | Kugelschwingmühle |
| Soll-Kornfeinheit: | mindestens unter 25 µm |
| Verarbeitung: | Spritzen (konventionell) |

Zwei Anstrichträger:

a. normale, in der Lackindustrie übliche Stahlbleche, blank, sorgfältigst entfettet,
b. phosphatierte Stahlbleche (Verfahren: Bonder 101 der Metallgesellschaft Frankfurt).

Die Ergebnisse der Korrosionsschutzprüfung der Versuchs- und Vergleichspigmente sind in Tabelle 1 zusammengefasst. Die Bewertung der Pigmente erfolgte nach folgendem Schema: Innerhalb des Prüfungszeitraumes wurden regelmässig Abmusterungen vorgenommen, bei denen die Bleche Benotungen von 0 (keine Schädigung) bis zu 12 (völlige Zerstörung des Anstriches) erhielten. Die Summe der Einzelabmusterungen eines jeden Bleches ergibt den Korrosionsgrad, welcher somit einen um so grösseren Wert hat, je schlechter das Korrosionsschutzvermögen des Anstriches ist.

Die erfindungsgemässen Korrosionsschutzpigmente liegen in ihrer Korrosionsschutzwirkung deutlich über der der sonst eingesetzten zwei- und dreiwertigen Metallsalze. Sie zeigen darüber hinaus trotz geringer slow release-Eigenschaften nicht die für typisch lösliche Pigmente gefürchtete Blasenbildung im Lack.

Sie sind daher hervorragend geeignet zur Verwendung in Korrosionsanstrichen, -lacken sowie korrosionshemmenden Schmiermitteln.

Nachfolgend wird die Erfindung beispielhaft erläutert.

*Beispiel 1*

986,3 g basisches Zinkcarbonat (33,0 Gew.-% ZnO) werden in 2 l Wasser eingerührt und auf 70° C erhitzt. Zu der Suspension werden anschliessend 7,65 g Benzoesäure (99,8 Gew.-%) und zusätzlich im Verlauf von 30 min 500 ml $Na_2Al(OH)_5$-Lösung (1,0 Mol $Al_2O_3$/l) zugegeben (pH-Wert: 11,8). Sodann wird der pH-Wert durch Zugabe von 28,82 g 85 gew.-%iger Phosphorsäure auf 9,5 herabgestellt, 1 h bei 70° C nachgerührt, filtriert, gewaschen und bei 110° C getrocknet.

System:

$$x\,ZnO \cdot \frac{1-x}{2}\,Al_2O_3 \cdot y_1\,P_2O_5 \cdot y_2\,CO_2 \cdot z\ \text{Benzoesäure} \cdot aq$$

| | | |
|---|---|---|
| x: | 0,8 | |
| $y_1$: | 0,025 | |
| $y_2$: | 0,15 | |
| z: | 0,0125 | (entspricht ca. 1,4 Gew.-%) |
| aq: | 0,86 | |

Reaktanten: basisches Zinkcarbonat
Natriumaluminat
Phosphorsäure
Benzoesäure

Pigmentspezifische Daten:

| | |
|---|---|
| BET-Oberfläche | 35,0 $m^2/g$ |
| Dichte | 3,05 $g/cm^3$ |
| wasserlösliche Anteile | 0,22% |

| *Analyse* | *Gew.-%* | |
|---|---|---|
| ZnO | 63,9 | (0,803) |
| $Al_2O_3$ | 10,0 | (0,1) |
| $P_2O_5$ | 3,5 | (0,0252) |
| C anorg. | 1,7 | (0,145) |
| C org. | 1,0 | (0,0122) |
| $H_2O$ | 15,2 | (0,86) |

*Beispiel 2*

739,7 g basisches Zinkcarbonat mit einem ZnO-Gehalt von 33,0 Gew.-% und 156,0 g Tonerdehydrat (65,36 Gew.-% $Al_2O_3$), was einem Mischungsverhältnis Zn/Al von 3:2 entspricht, werden gut gemischt und mit etwa Wasser angeteigt. Sodann werden 86,47 g 85 gew.-%ige Phosphorsäure und 32,1 g 40 gew.-%ige Phosphonopropionsäure zugesetzt. Diese Reaktionsmischung wird im Autoklaven 4 h bei 190° C getempert (Druck: 14 bar), das feuchte Endprodukt bei 110° C getrocknet.

System:

$$x\,ZnO \cdot \frac{1-x}{2}\,Al_2O_3 \cdot y_1\,P_2O_5 \cdot y_2\,CO_2 \cdot z\ \text{Phosphonopropionsäure} \cdot aq$$

| | | |
|---|---|---|
| x: | 0,6 | |
| $y_1$: | 0,075 | |
| $y_2$: | 0,1 | |
| z: | 0,01667 | (entspricht ca. 2,5 Gew.-%) |
| aq: | 1,1 | |

Pigmentspezifische Daten:

| | |
|---|---|
| BET-Oberfläche | 24,0 $m^2/g$ |
| Dichte | 2,09 $g/cm^3$ |
| wasserlösliche Anteile | 0,41% |

| *Analyse* | *Gew.-%* | |
|---|---|---|
| ZnO | 47,5 | (0,597) |
| $Al_2O_3$ | 20,1 | (0,202) |
| $P_2O_5$ | 10,5 | (0,0756) |
| C anorg. | 1,1 | (0,0936) |
| C org. | 0,58 | (0,0164) |
| $H_2O$ | 19,4 | (1,1) |

*Beispiel 3*

1232,9 g basisches Zinkcarbonat (ZnO-Gehalt: 33,0%) werden in 1200 ml Wasser eingerührt und auf 70° C erwärmt. Im Verlauf von jeweils 10 min werden 172,93 g 85 gew.-%ige Phosphorsäure und 38,53 g 40 gew.-%ige Phosphonopropionsäure zudosiert. Nach 4stündigem Rühren bei 70° C ist die Umsetzung abgeschlossen, und das Produkt kann abfiltriert, gewaschen und bei 110° C getrocknet werden.

System:

$x\,ZnO \cdot y_1\,P_2O_5 \cdot y_2\,CO_2 \cdot$ z Phosphonopropionsäure·aq

| | | |
|---|---|---|
| x: | 1 | |
| $y_1$: | 0,15 | |
| $y_2$: | 0,19 | |
| z: | 0,02 | (entspricht 2,4 Gew.-%) |
| aq: | 0,87 | |

Pigmentspezifische Daten:

| | |
|---|---|
| BET-Oberfläche | 34,0 $m^2/g$ |
| Dichte | 3,26 $g/cm^3$ |
| wasserlösliche Anteile | 0,17% |

| *Analyse* | *Gew.-%* | |
|---|---|---|
| ZnO | 62,1 | (1,0) |
| $P_2O_5$ | 16,1 | (0,149) |
| C anorg. | 1,7 | (0,186) |
| C org. | 0,54 | (0,0196) |
| $H_2O$ | 12,0 | (0,871) |

*Beispiel 4*

Es wird entsprechend Beispiel 3 vorgegangen. Anstelle der Phosphonopropionsäure werden 29,2 g Polycarbonsäure (Belgard EV, Handelsprodukt der Firma Ciba-Geigy) zugesetzt.

System:

$x\,ZnO \cdot y_1\,P_2O_5 \cdot y_2\,CO_2 \cdot z$ Polycarbonsäure·aq

| | |
|---|---|
| x: | 1 |
| $y_1$: | 0,15 |
| $y_2$: | 0,19 |
| z: | 4,4 Gew.-% bezogen auf anorganische Matrix |
| aq: | 0,87 |

Pigmentspezifische Daten:

| | |
|---|---|
| BET-Oberfläche | 45 $m^2/g$ |
| Dichte | 3,58 $g/cm^3$ |
| wasserlösliche Anteile | 0,19% |

| *Analyse* | *Gew.-%* | |
|---|---|---|
| ZnO | 60,4 | (1,002) |
| $P_2O_5$ | 15,5 | (0,147) |
| C anorg. | 1,8 | (0,186) |
| C org. | 2,44 | (4,69) |
| $H_2O$ | 12,5 | (0,86) |

*Beispiel 5*

Zu 739,7 g basischem Zinkcarbonat mit einem Gehalt an ZnO von 33,0 Gew.-% werden 3,7 l Wasser gegeben und diese Suspension unter Rühren auf 80° C erhitzt. Im Verlauf von 30 min werden 76,86 g 85 gew.-%ige Phosphorsäure und 20,18 g 50 gew.-%ige Polyacrylsäure POC-HS 2020 (Handelsprodukt der Firma Degussa) mit einem mittleren Molekulargewicht von 1500 zugetropft und die Mischung 2 h lang bei 80° C weitergerührt. Die noch stark sauer reagierende Suspension (pH-Wert 5,3) mit 166,7 ml einer 2,0 molaren $Na_{1,56}\,Al(OH)_{4,56}$-Lösung auf einen pH-Wert von 8,5 eingestellt, noch eine weitere Stunde bei 80° C gerührt, filtriert, gewaschen und bei 105° C getrocknet.

System:

$x\,ZnO \cdot \frac{1-x}{2}\,Al_2O_3 \cdot\ y_1\,P_2O_5 \cdot y_2\,CO_2 \cdot$ z Polyacrylsäure·aq

| | | |
|---|---|---|
| x: | 0,9 | |
| $y_1$: | 0,1 | |
| $y_2$: | 0,2 | |
| z: | 0,00667 | (entspricht ca. 2,4 Gew.-%) |
| aq: | 1,25 | |

Pigmentspezifische Daten:

| | |
|---|---|
| BET-Oberfläche | 53,0 $m^2/g$ |
| Dichte | 2,39 $g/cm^3$ |
| wasserlösliche Anteile | 0,31% |

| *Analyse:* | *Gew.-%* | |
|---|---|---|
| ZnO | 57,7 | (0,903) |
| $Al_2O_3$ | 4,0 | (0,050) |
| $P_2O_5$ | 10,9 | (0,098) |
| C anorg. | 2,0 | (0,212) |
| C org. | 1,1 | (0,0019) |
| $H_2O$ | 17,6 | (1,24) |

*Beispiel 6*

Zu 2000 ml einer auf 90° C temperierten Natriumaluminat/Zinkat-Lösung (0,5 mol $Al_2O_3$/1; 0,12 mol ZnO/1) werden simultan zwei Lösungen gegeben, die erste bestehend aus 763,4 ml mit 1,31 mol $MgSO_4$/l und 0,0375 mol $(NH_4)\,Mo_7O_{24}$/l, die zweite aus 794,9 ml $ZnSO_4$-Lauge (1,95 mol) $ZnSO_4$/l). Anschliessend wird mit einer 45 gew.-%igen Natronlauge ein End-pH-Wert von 8,5 eingestellt. Die Reaktionslösung sollte bei der Zugabe eine Temperatur von 80° C nicht unterschreiten. Nach der Fällung wird noch 2 h lang bei 90° C gerührt. Sodann wird heiss abfiltriert, gewaschen, der Filterkuchen erneut aufgeschlämmt und 62,0 g Zinkbenzoat (99,3 Gew.-%) und 46,1 g 85 gew.-%ige Phosphorsäure hinzugefügt. Ein evtl. zu starkes Absinken des pH-Wertes wird mit etwas NaOH wieder ausgeglichen (End-pH-Wert: 8,5). Die Suspension wird noch 2 h lang unter Rühren auf Temperatur gehalten, dann filtriert, salzfrei gewaschen, der Filterkuchen bei 110° C getrocknet.

System:

$x_1\,ZnO \cdot x_2\,MgO \cdot \frac{1-(x_1+x_2)}{2}\,Al_2O_3 \cdot y_1\ P_2O_5 \cdot$
$y_2\,MoO_3 \cdot z$ Benzoesäure·aq

| | | |
|---|---|---|
| $x_1$: | 0,4 | |
| $x_2$: | 0,2 | |
| $y_1$: | 0,04 | |
| $y_2$: | 0,04 | |
| z: | 0,08 | (entspricht 8,25 Gew.-%) |
| aq: | 1,5 | |

Pigmentspezifische Daten:

| | |
|---|---|
| BET-Oberfläche | 41,0 $m^2/g$ |
| Dichte | 2,5 $g/cm^3$ |
| wasserlösliche Anteile | 0,32% |

| *Analyse:* | *Gew.-%* | |
|---|---|---|
| ZnO | 27,7 | (0,407) |
| MgO | 6,6 | (0,196) |
| $Al_2O_3$ | 17,4 | (0,204) |
| $MoO_3$ | 4,8 | (0,040) |
| $P_2O_5$ | 4,8 | (0,040) |
| C org. | 5,25 | (0,075) |
| $H_2O$ | 31,2 | (1,51) |

*Tabelle 1*

*Korrosionsschutzergebnisse nach SS DIN 50 021*

| Beispiel-Nr. bzw. Produktbezeichnung | Bonder 101 KG* | Stahlblech KG* |
|---|---|---|
| 1 | 12,0 | 23,5 |
| 2 | 14,0 | 22,0 |
| 3 | 8,0 | 14,0 |
| 4 | 4,5 | 16,5 |
| 5 | 6,0 | 24,0 |
| 6 | 10,0 | 14,5 |
| Zinkchromat | 4,5 | 19,0 |
| Zinkphosphat | 17,5 | 27,5 |

* Korrosionsgrad = Summe von 6 Abmusterungen (Laufzeit des Salzsprühtestes: 744 h).

**Patentansprüche**

1. Korrosionsschutzpigmente, bestehend aus einer anorganischen Matrix und darin eingelagerten organischen Substanzen der Formel

$$x\,Me\,(II)\,O\cdot\frac{1-x}{2}\,Me\,(III)_2O_3\cdot y\,A\cdot z\,I\cdot aq$$

in der

| | |
|---|---|
| Me (II) | ein oder mehrere zweiwertige Metalle, |
| Me (III) | ein oder mehrere dreiwertige Metalle, |
| A | ein oder mehrere Anhydride anorganischer Säuren, |
| I | eine oder mehrere organische Verbindungen, und |
| aq | 0,5 bis 9, bevorzugt 0,75 bis 4 Mol Wasser bedeuten, |
| x, y und z | ganze oder gebrochene Zahlen sind, wobei |
| x | Werte von 0 bis 1, |
| y | Werte von 0 bis 0,7, und |
| z | Werte von grösser 0 bis 0,4 annehmen, |

mit der weiteren Massgabe, dass mindestens 0,5, bevorzugt mehr als 1,0 Gew.-%, an organischer Substanz, bezogen auf den anorganischen Anteil, enthalten sind.

2. Korrosionsschutzpigmente gemäss dem Anspruch 1, dadurch gekennzeichnet, dass sie eine spezifische Oberfläche nach BET zwischen 0,1 und 200, bevorzugt zwischen 1 und 150 $m^2/g$, und einen Gehalt an wasserlöslichen Anteilen von weniger als 0,6%, vorzugsweise weniger als 0,3%, aufweisen.

3. Korrosionsschutzpigmente gemäss einem der Ansprüche 1 oder 2, dadurch gekennzeichnet, dass die zweiwertigen Metalle eines oder mehrere der Gruppe Magnesium, Calcium, Strontium, Barium, Zink, Eisen und Mangan, die dreiwertigen Metalle eines oder mehrere der Gruppe Aluminium, Eisen, Mangan und Chrom sind.

4. Korrosionsschutzpigmente gemäss einem der Ansprüche 1 bis 3, dadurch gekennzeichnet, dass die zwei- und dreiwertigen Metalle farblos sind.

5. Korrosionsschutzpigmente gemäss einem der Ansprüche 1 bis 4, dadurch gekennzeichnet, dass die Anhydride der anorganischen Säuren eines oder mehrere Oxide der Elemente Bor, Chrom, Kohlenstoff, Molybdän, Phosphor und Wolfram sind.

6. Korrosionsschutzpigmente gemäss einem der Ansprüche 1 bis 5, dadurch gekennzeichnet, dass die organischen Substanzen eine oder mehrere Korrosionsinhibitoren mit Lewis-Basen-Charakter sind.

7. Korrosionsschutzpigmente gemäss einem der Ansprüche 1 bis 6, dadurch gekennzeichnet, dass der organische Inhibitor Carbon- und/oder Sulfon- und/oder Phosphonsäuregruppen enthält.

8. Verfahren zur Herstellung der Korrosionsschutzpigmente gemäss einem der Ansprüche 1 bis 7, dadurch gekennzeichnet, dass eine zwei- und/oder dreiwertige Metallsalzlösung im gewünschten Verhältnis mit äquivalenten Mengen oder im Überschuss an Alkalien, gegebenenfalls mit Alkalimetallaten normal, invers oder gleichzeitig bei Temperaturen bis 100, vorzugsweise 50-100° C, gefällt wird, wobei die anorganischen Anionen und die organischen Inhibitoren mit vorgelegt, gleichzeitig oder nach der Fällung, oder gegebenenfalls nach Abtrennung der Mutterlauge des Wirtsgitters zugegeben werden können.

9. Verfahren zur Herstellung der Korrosionsschutzpigmente gemäss einem der Ansprüche 1 bis 7, dadurch gekennzeichnet, dass basische Salze der zwei- und/oder dreiwertigen Metalle mit der Säureform der anorganischen und gegebenenfalls organischen Ionen bei Temperaturen bis 100, vorzugsweise zwischen 50 und 100° C, an der Luft behandelt und diese gegebenenfalls nach einer vorhergehenden Alkalisierung im Autoklaven bei Temperaturen bis zu 220° C bis zu 12 h lang erhitzt werden.

10. Verwendung der Korrosionsschutzpigmente gemäss einem der Ansprüche 1 bis 9 in Korrosionsschutzanstrichen, -lacken und korrosionshemmenden Schmiermitteln.

**Revendications**

1. Pigments anticorrosifs consistant en une matrice inorganique et des substances organiques incorporées dans celle-ci, de formule

$$x\,Me\,(II)\,O\cdot\frac{1-x}{2}\,Me\,(III)_2O_3\cdot y\,A\cdot z\,I\cdot aq$$

dans laquelle

Me (II) représente un ou plusieurs métaux divalents,
Me (III) un ou plusieurs métaux trivalents,
A un ou plusieurs anhydrides d'acides inorganiques
I un ou plusieurs composés organiques, et
aq 0,5 à 9, de préférence 0,75 à 4 mol d'eau,
x, y et z sont des nombres entiers ou fractionnaires, avec des valeurs de x de 0 à 1, de y de 0 à 0,7 et de z de plus de 0 à 0,4,

avec la condition supplémentaire que la teneur en substance organique est d'au moins 0,5, de préférence de plus de 1,0% en poids, par rapport à la fraction inorganique.

2. Pigments anticorrosifs selon la revendication 1, caractérisés en ce qu'ils ont une surface spécifique BET entre 0,1 et 200, de préférence entre 1 et 150 $m^2/g$, et une teneur en fractions hydrosolubles de moins de 0,6, de préférence de moins de 0,3%.

3. Pigments anticorrosifs selon l'une des revendications 1 ou 2, caractérisés en ce que les métaux divalents sont un ou plusieurs métaux du groupe magnésium, calcium, strontium, baryum, zinc, fer et manganèse, les métaux trivalents, un ou plusieurs du groupe aluminium, fer, manganèse et chrome.

4. Pigments anticorrosifs selon l'une des revendications 1 à 3, caractérisés en ce que les métaux di- et trivalents sont incolores.

5. Pigments anticorrosifs selon l'une des revendications 1 à 4, caractérisés en ce que les anhydrides des acides inorganiques sont un ou plusieurs oxydes des éléments bore, chrome, carbone, molybdène, phosphore et tungstène.

6. Pigments anticorrosifs selon l'une des revendications 1 à 5, caractérisés en ce que les substances organiques sont un ou plusieurs inhibiteurs de corrosion à caractère de base de Lewis.

7. Pigments anticorrosifs selon l'une des revendications 1 à 6, caractérisés en ce que l'inhibiteur organique contient des groupes acide carboxylique et/ou sulfonique et/ou phosphonique.

8. Procédé pour la fabrication des pigments anticorrosifs selon l'une des revendications 1 à 7, caractérisé en ce que l'on précipite une solution de sels métalliques di- et/ou trivalents dans le rapport désiré avec des quantités équivalentes ou en excès d'alcalis, éventuellement avec des métallates alcalins, par précipitation normale, inverse ou simultanée à des températures allant jusqu'à 100 de préférence de 50-100° C, les anions inorganiques et les inhibiteurs organiques pouvant être chargés au préalable, simultanément ou après la précipitation, ou éventuellement ajoutés après séparation de la liqueur mère du réseau récepteur.

9. Procédé pour la fabrication de pigments anticorrosifs selon l'une des revendications 1 à 7, caractérisé en ce que l'on traite à l'air à des températures allant jusqu'à 100, de préférence entre 50 et 100° C, des sels basiques des métaux divalents et/ou trivalents avec la forme acide des ions inorganiques et éventuellement organiques et on traite ceux-ci éventuellement après une alcalinisation préalable en autoclave à des températures allant jusqu'à 220° C pendant des durées allant jusqu'à 12 h.

10. Utilisation des pigments anticorrosifs selon l'une des revendications 1 à 9 dans des peintures et laques anticorrosives et des lubrifiants inhibiteurs de corrosion.

## Claims

1. Corrosion-inhibiting pigments, consisting of an inorganic matrix and, intercalated therein, organic substances of the formula

$$x\,Me\,(II)\,O\cdot\frac{1-x}{2}\,Me\,(III)_2O_3\cdot y\,A\cdot z\,I\cdot aq$$

in which

Me (II) denotes one or more divalent metals,
Me (III) denotes one or more trivalent metals, A denotes one or more anhydrides of inorganic acids,
I denotes one or more organic compounds and
aq denotes 0.5 to 9, preferably 0.75 to 4, mol of water,
x, y and z are whole or fractional numbers,
x having values of 0 to 1, y having values of 0 to 0.7 and z having values of greater than 0 to 0.4,

with the further proviso that at least 0.5%, preferably more than 1.0% by weight, of organic substance, based on the inorganic component, is present.

2. Corrosion-inhibiting pigments according to Claim 1, characterised in that they have a specific surface according to BET of between 0.1 and 200, preferably between 1 and 150 $m^2/g$, and a content of water-soluble components of less than 0.6, preferably less than 0.3%.

3. Corrosion-inhibiting pigments according to Claim 1 or 2, characterised in that the divalent metals are one or more from the group comprising magnesium, calcium, strontium, barium, zinc, iron and manganese, and the trivalent metals are one or more from the group comprising aluminium, iron, manganese and chromium.

4. Corrosion-inhibiting pigments according to one of Claims 1 to 3, characterised in that the divalent and trivalent metals are colourless.

5. Corrosion-inhibiting pigments according to one of Claims 1 to 4, characterised in that the anhydrides of inorganic acids are one or more oxides of the elements boron, chromium, carbon, molybdenum, phosphorus and tungsten.

6. Corrosion-inhibiting pigments according to one of Claims 1 to 5, characterised in that the

organic substances are one or more corrosion inhibitors having the character of Lewis bases.

7. Corrosion-inhibiting pigments according to one of Claims 1 to 6, characterised in that the organic inhibitor contains carboxylic and/or sulphonic acid groups.

8. Process for the production of the corrosion-inhibiting pigments according to one of Claims 1 to 7, characterised in that a divalent and/or trivalent metal salt solution is precipitated in the required ratio with equivalent quantities or an excess of alkalis, optionally in conjunction with alkali metallates, normally, inversely or simultaneously at temperatures of up to 100, preferably 50-100° C, it being possible for the inorganic anions and the organic inhibitors to be initially introduced together, either during or after precipitation, or to be added, if appropriate, after the mother liquor of the host lattice has been separated off.

9. Process for the production of the corrosion-inhibiting pigments according to one of Claims 1 to 7, characterised in that basic salts of the divalent and/or trivalent metals with the acid form of the inorganic and, optionally, organic ions are treated in air at temperatures of up to 100, preferably of between 50 and 100° C, and, optionally after prior alkalisation, are heated in an autoclave for up to 12 h at temperatures of up to 220° C.

10. Use of the corrosion-inhibiting pigments according to one of Claims 1 to 9 in anticorrosive paints, lacquers and corrosion-inhibiting lubricants.